# EUROPEAN PATENT SPECIFICATION

(11) **EP 3 227 818 B1**
(45) Date of publication and mention of the grant of the patent: **06.01.2021**
(21) Application number: 15823207.4
(22) Date of filing: 01.12.2015
(51) Int. Cl.: G06F 21/52, G06F 21/60

(54) **SYSTEM AND METHOD FOR SECURING LOCALLY DEPLOYED APPLICATIONS**
SYSTEM UND VERFAHREN ZUR SICHERUNG VON LOKAL EINGESETZTEN ANWENDUNGEN
SYSTÈME ET PROCÉDÉ DE SÉCURISATION D'APPLICATIONS DÉPLOYÉES LOCALEMENT

(30) Priority: 01.12.2014 NO 20141445
(43) Date of publication of application: 11.10.2017
(73) Proprietor: Okay AS, 0161 Oslo (NO)
(72) Inventor: LEMBERG, Trond, 1409 Skotbu (NO)
(74) Representative: Oslo Patentkontor AS
(86) International application number: PCT/NO2015/050234
(87) International publication number: WO 2016/089218

(56) References cited:
- US-A1- 2006 282 660
- US-A1- 2012 210 443

## Description

### Technical Field

The present invention regards a system and a method for securing locally deployed applications, and more particularly a system and a method for securing locally deployed applications running on vulnerable electronic platforms.

### Background of the invention

Service providers digitalized services and make them available over insecure platforms, whether they are in the possession of end users, or are types of equipment connected over open networks in order to serve end users with new services. As examples Mobile Banking and The Internet of Things promise a huge value proposition for both businesses and individuals, but cannot be launched in full scale or with a reasonable risk profile without deploying security measures that prevents from hacking into these platforms and applications.

Theoretically, Public Key Infrastructure together with Trusted Computing would be a good technological candidate for protecting platforms, but the deployment rate in the market is relatively small due to large costs, cumbersome logistics and with a general lack of interoperability between heterogeneous deployments. The document US 2012/210443, 16th August 2012 (2012-08-16), discloses a system wherein an app provider, such as an employer or a cellphone provider, can secure its apps before consumers download an app from their app store or marketplace. The document US 2006/282660, 14th December 2006 (2006-12-14), describes systems and methods for authenticating access requests from user devices by presenting one of a plurality of graphical user interfaces selected depending on a perceived risk of fraud associated with the devices.

### Summary of the invention

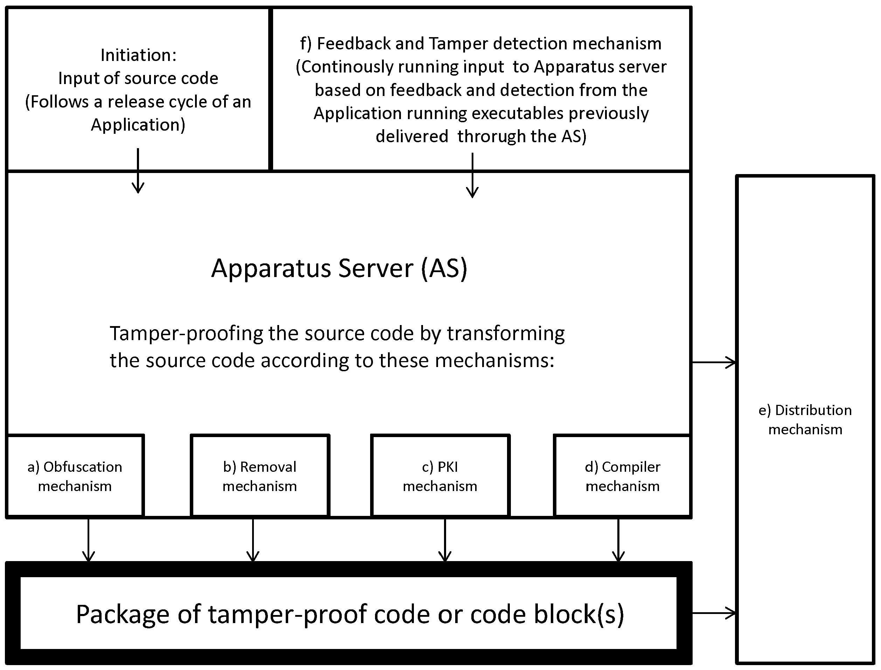

It is therefore the purpose of the present invention, as it is stated in the set of claims, to solve the problems mentioned above. The mechanism of the invention works according to this description:
(1) A Service Provider makes available the source code of an application to be secured by the Apparatus by letting the Apparatus server (AS) import the source code of the application. The AS may be initiated manually, e.g. as part of a software release cycle or automatically by listening to its Tamper Detecting mechanism. In both ways the imported source code is analysed and transformed according to the strategic profile that the Service Provider decides to choose from these AS' mechanisms, ref Drawing 1:
   a. Obfuscation mechanism,
   b. Removal mechanism,
   c. PKI mechanism,
   d. Complier mechanism,
   e. Distribution mechanism or
   f. directly through the Tamper detection and Feedback mechanism working in conjunction with the AS.
(2) The Tamper detection and Feedback mechanism automatically generates patching requirements towards all other sub sequential mechanisms of the AS. The Tamper detection mechanism gets its input from deployed applications either because hackers tries to utilize obsolete functionality which are detected in the server side or because hackers are trapped and reported into fake software functions intentionally deployed by the Obfuscation mechanism of AS. The Feedback mechanism tells the AS to provide a patch after a certain function, command or feature is executed in the deployed application, e.g. distribute a new patch to a certain user/equipment which removes code blocks after use.
(3) The Obfuscation mechanism manages and use any type of obfuscations techniques available from the open source community, commercial vendors or tailored by the AS itself. Tailored obfuscation typically generates personalized executables enabling Service Providers to deploy user/equipment specific versions of applications making it even harder for attacker to launch massive attacks.
(4) The Removal mechanism manages and generates instructions for the Distribution mechanism to remove code blocks from applications in which already are deployed.
(5) The PKI -Public Key Infrastructure- mechanism manages and delivers keys and certificates working internally between components and services using the mechanism of this invention. As part of this mechanism a key archive keeps track of all keys historically used in order to provide non-repudiation on transactions.
(6) The Compiler mechanism compiles source code that is processed and transformed through the AS.
(7) The Distribution mechanism schedules when and how to distribute applications first time and subsequent patches comprising which protocols to use and change between. In case the application to be patched or used is a mobile phone app, the Distribution mechanism may even be switched between IP based transport protocols and Telecom based protocols like any audio protocols over PSTN, creating a second channel binding the end user authentication to services, apps and their updates.

### Detailed description

The present invention regards a system and a method for securing locally deployed end point running applications, running on vulnerable electronic platforms, like mobile phones, tablets and personal computers or other electronic equipment with software which may be updated remotely. More particularly, a system and a method that enables Service Providers to continuously execute patching or remove code blocks of running applications in a dynamic and non-predictable way. This is done through tactically or systematically randomization of changes on any aspects of machine executable code while typically running on insecure environments. This is done including, but not limited to transforming the syntax, sematic, interfaces, protocols, formats and security keys and secrets with obfuscation techniques on the executable application code. The objective of the invention is to out-perform any attempts, in terms of cost and time for a hacker, of injecting malicious code into applications or hijack sessions, take control over the interaction between the service provider and the end user/deployed equipment or reverse engineering the application in order to prepare or execute remote attacks on applications.
(1) A Service Provider makes available the source code of an application to be secured by the invented Apparatus by letting the Apparatus server (AS) import the source code of the application. The AS may be initiated; (i) manually, e.g. as part of a software release cycle or (ii) automatically by listening to the AS' Tamper Detecting and Feedback mechanism of the latest software release or patch or (iii) randomly in order dynamically change the application with the purpose of continuously change and update the application in question. In all ways the imported source code is analysed and transformed according to the strategic profile that the Service Provider decides to choose from these AS' mechanisms:
   a. Obfuscation mechanism,
   b. Removal mechanism,
   c. PKI mechanism,
   d. Complier mechanism,
   e. Distribution mechanism or
   f. through the Tamper detection and Feedback mechanism working in conjunction with the AS. When the source code is imported automatically it may be digitally signed and verified a genuine before the process of transformation starts.
(2) The Tamper detection and Feedback mechanism automatically generates patching requirements towards all other sub sequential mechanisms of the AS. The Tamper detection mechanism gets digitally signed input from deployed applications either because hackers tries to utilize obsolete functionality which are detected in the server side or because hackers are trapped into fake software functions intentionally deployed by the Obfuscation mechanism of AS. The Feedback mechanism creates a digitally signed message which tells the AS to provide a patch after a certain function, command, error or feature is executed in the deployed application, e.g. distribute a new patch to a certain user/equipment which removes code blocks after use. In case a strategic profile demands continuous and dynamic change of application the latest software release for user/equipment is normally already known by AS and therefore no import of source code is necessary.

### a. Example 1: Use of invention based on Feedback mechanism for a mobile app user logging on to a service

i. An app logon function is trigged
ii. A digitally signed request of getting an obfuscated keypad is sent from Services Provider to the AS
(3) The Obfuscation mechanism manages and use any type of obfuscations techniques available from the open source community, commercial vendors or tailored by the AS itself. Tailored obfuscation typically generates personalized executables enabling Service Providers to deploy user/equipment specific versions of applications making it extremely costly or practically impossible for attackers to launch massive attacks. This technique combines the user-ID with the software-ID with the equipment-ID with the obfuscated and digitally signed software patch.

### a. Example 1: Use of invention based on Feedback mechanism for a mobile app user logging on to a service

i. The AS receives and verifies the keypad request from Service Provider
ii. AS lookup its keypad library and generates a random string of keypad numbers (0-9)
iii. The new block of source code including the new keypad is generated and sent to the Compiler mechanism
(4) The Removal mechanism manages and generates digitally signed instructions for the Distribution mechanism to remove code blocks from applications deployed on equipment that run applications in questions.

### a. Example 2: Use of invention based on Feedback mechanism for a mobile app user after logging on to a service

i. An app remove keypad message is trigged after login by the Service Provider
ii. Service Provider sends remove keypad message to AS
iii. The new block of source code that removes keypad is generated by AS and sent to the Compiler mechanism
(5) The internal PKI -Public Key Infrastructure- mechanism manages and delivers keys and certificates working internally between components and services using the mechanism of this invention. As part of this mechanism a key archive keeps track of all keys historically used in order to provide non-repudiation on transactions.

### a. Example 1 and 2: Use of invention based on Feedback mechanism.

i. New key pairs for encryption and authentication is generated.
ii. App and/or end user private keys are transported over either encrypted telecom channels, encrypted IP based channels or both.
iii. Installation of keys are scheduled to take place before any sub-sequential real usage of these keys actually is implemented by AS.
iv. AS sends a signed probe message with a required auto-reply from App to verify that new keys is operative on the App.
(6) The Compiler mechanism compiles source code that is processed and transformed through the AS. The output of the process is digitally signed and obfuscated compiled code ready for distribution and installation.

### a. Example 1 and 2: Use of invention based on Feedback mechanism.

i. Received source code is compiled and digitally signed by the AS server
ii. The compiled code block is sent to the Distribution mechanism
(7) The Distribution mechanism schedules when and how to distribute applications first time and subsequent patches comprising which protocols to se and change between. In case the application to be patched or used is a mobile phone app, the Distribution mechanism may even be switched between end to end encrypted and authenticated IP based transport protocols and Telecom based protocols, like any type of audio protocols over PSTN trigging the end user to verify an action on top of the patch.

### a. Example1 and 2: Use of invention based on Feedback mechanism.

i. The AS connects with the mobile phone app and transmits the digitally signed and compiled code block to the app
ii. The mobile phone app automatically verify, installs and runs the updated code with the following results: Example 1: A new obfuscated keypad is displayed to the user. Example 2: The keypad code block is automatically removed after use.
iii. Optionally, a PSTN call from AS towards the end user is trigging the end user to verify control over the mobile phone and the app.

## Claims

1. A system for securing locally deployed applications operating on an electronic platform by having the locally deployed applications updated remotely through a distribution mechanism by an apparatus server, said system further comprises a service provider making available the source code of said locally deployed application, an apparatus imports said source code to the apparatus server, said apparatus server tamper proofs the source code, packages the tamper proofed code and distributes it using the distribution mechanism, **characterized in that** the apparatus server is adapted to tamper proof said source code by choosing obfuscation mechanism, removal mechanism, PKI mechanism, compiler mechanism and/or distribution mechanism based on a strategic profile chosen by the service provider.

2. A system according to claim 1 wherein said application server can be initiated manually as part of a software release by said service provider.

3. A system according to claim 1 wherein said application server can be initiated automatically by listening to a tamper detection and feedback mechanism which receives input from locally deployed applications.

4. A system according to claim 1 wherein said application server can be initiated randomly according to the policy of the apparatus server, after a certain function, command error or feature is executed in the locally deployed application.

5. A method for securing locally deployed applications operating on an electronic platform by having the locally deployed applications updated remotely through a distribution mechanism by an apparatus server, said system further comprises a service provider making available the source code of said locally deployed application, an apparatus imports said source code to the apparatus server, said apparatus server tamper proofs the source code, packages the tamper proofed code and distributes it using the distribution mechanism, **characterized in that** said source code is tamper proofed by choosing obfuscation mechanism, removal mechanism, PKI mechanism, compiler mechanism and/or distribution mechanism based on a strategic profile chosen by the service provider.

6. A method according to claim 5 wherein said application server can be initiated manually as part of a software release by said service provider.

7. A method according to claim 5 wherein said application server can be initiated automatically by listening to a tamper detection and feedback mechanism which receives input from the locally deployed applications.

8. A method according to claim 5 wherein said application server can be initiated randomly according to the policy of the apparatus server, after a certain function, command error or feature is executed in the locally deployed application.

## Patentansprüche

1. System zum Sichern von lokal eingesetzten Anwendungen, die auf einer elektronischen Plattform arbeiten, indem man die lokal eingesetzten Anwendungen über einen Verteilungsmechanismus durch einen Geräteserver entfernt aktualisieren lässt, wobei das System ferner einen Dienstanbieter umfasst, der den Quellcode der lokal eingesetzten Anwendung zur Verfügung stellt, ein Gerät den Quellcode auf den Geräteserver importiert, der Geräteserver den Quellcode manipulationssicher macht, den manipulationssicher gemachten Code bündelt und ihn unter Verwendung des Verteilungsmechanismus verteilt, **dadurch gekennzeichnet, dass** der Geräteserver geeignet ist, den Quellcode manipulationssicher zu machen, indem er einen Verschleierungsmechanismus, einen Beseitigungsmechanismus, einen PKI-Mechanismus, einen Compiler-Mechanismus und/oder einen Verteilungsmechanismus basierend auf einem von dem Dienstanbieter gewählten strategischen Profil wählt.

2. System nach Anspruch 1, wobei der Anwendungsserver als Teil einer Software-Version von dem Dienstanbieter gestartet werden kann.

3. System nach Anspruch 1, wobei der Anwendungsserver durch Abhören eines Manipulationsdetektions- und Rückmeldungsmechanismus, der eine Eingabe von lokal eingesetzten Anwendungen empfängt, automatisch gestartet werden kann.

4. System nach Anspruch 1, wobei der Anwendungsserver gemäß der Richtlinie des Geräteservers zufallsmäßig gestartet werden kann, nachdem eine gewisse Funktion, ein Befehlsfehler oder ein Merkmal in der lokal eingesetzten Anwendung ausgeführt wurde.

5. Verfahren zum Sichern von lokal eingesetzten Anwendungen, indem man die lokal eingesetzten Anwendungen über einen Verteilungsmechanismus durch einen Geräteserver entfernt aktualisieren lässt, wobei das System ferner einen Dienstanbieter umfasst, der den Quellcode der lokal eingesetzten Anwendung zur Verfügung stellt, ein Gerät den Quellcode auf den Geräteserver importiert, der Geräteserver den Quellcode manipulationssicher macht, den manipulationssicher gemachten Code bündelt und ihn unter Verwendung des Verteilungsmechanismus verteilt, **dadurch gekennzeichnet, dass** der Quellcode manipulationssicher gemacht wird, indem ein Verschleierungsmechanismus, ein Beseitigungsmechanismus, ein PKI-Mechanismus, ein Compiler-Mechanismus und/oder ein Verteilungsmechanismus basierend auf einem von dem Dienstanbieter gewählten strategischen Profil gewählt wird.

6. Verfahren nach Anspruch 5, wobei der Anwendungsserver als Teil einer Software-Version durch den Dienstanbieter manuell gestartet werden kann.

7. Verfahren nach Anspruch 5, wobei der Anwendungsserver durch Abhören eines Manipulationsdetektions- und Rückmeldungsmechanismus, der eine Eingabe von lokal eingesetzten Anwendungen empfängt, automatisch gestartet werden kann.

8. Verfahren nach Anspruch 5, wobei der Anwendungsserver gemäß der Richtlinie des Geräteservers zufallsmäßig gestartet werden kann, nachdem eine gewisse Funktion, ein Befehlsfehler oder ein Merkmal in der lokal eingesetzten Anwendung ausgeführt wurde.

## Revendications

1. Système pour sécuriser des applications déployées localement fonctionnant sur une plate-forme électronique en ayant les applications déployées localement mises à jour à distance via un mécanisme de distribution par un serveur, ledit système comprend en outre un fournisseur de services mettant à disposition le code source de ladite application déployée localement, un appareil importe ledit code source au serveur, ledit serveur rend le code source inviolable, emballe le code inviolable et le distribue en utilisant le mécanisme de distribution,
**caractérisé en ce que** le serveur est adapté pour empêcher toute altération dudit code source en choisissant un mécanisme d'obscurcissement, un mécanisme de suppression, un mécanisme PKI, un mécanisme de compilateur et/ou un mécanisme de distribution en fonction d'un profil stratégique choisi par le fournisseur de services.

2. Système selon la revendication 1, dans lequel ledit serveur peut être initié manuellement dans le cadre d'une mise à jour de logiciel par ledit fournisseur de services.

3. Système selon la revendication 1, dans lequel ledit serveur peut être initié automatiquement en écoutant un mécanisme de détection d'altération et de retour d'information qui reçoit des données d'applications déployées localement.

4. Système selon la revendication 1, dans lequel ledit serveur peut être initié de manière aléatoire selon la politique du serveur, après qu'une certaine fonction, erreur de commande ou fonctionnalité soit exécutée dans l'application déployée localement.

5. Méthode pour sécuriser des applications déployées localement fonctionnant sur une plate-forme électronique en ayant les applications déployées localement mises à jour à distance via un mécanisme de distribution par un serveur, ledit système comprend en outre un fournisseur de services mettant à disposition le code source de ladite application déployée localement, un appareil importe ledit code source au serveur, ledit serveur rend le code source inviolable, emballe le code inviolable et le distribue en utilisant le mécanisme de distribution,
**caractérisé en ce que** ledit code source est rendu le code source inviolable en choisissant un mécanisme d'obscurcissement, un mécanisme de suppression, un mécanisme PKI, un mécanisme de compilateur et/ou un mécanisme de distribution en fonction d'un profil stratégique choisi par le fournisseur de services.

6. Méthode selon la revendication 5, dans laquelle ledit serveur peut être initié manuellement dans le cadre d'une mise à jour de logiciel par ledit fournisseur de services.

7. Méthode selon la revendication 5, dans laquelle ledit serveur peut être initié automatiquement en écoutant un mécanisme de détection d'altération et de retour d'information qui reçoit des données d'applications déployées localement.

8. Méthode selon la revendication 5, dans laquelle ledit serveur peut être initié de manière aléatoire selon la politique du serveur, après qu'une certaine fonction, erreur de commande ou fonctionnalité soit exécutée dans l'application déployée localement.
